# FASCICULE DE BREVET EUROPEEN

(11) **EP 4 177 574 B1**
(45) Date de publication et mention de la délivrance du brevet: **29.05.2024**
(21) Numéro de dépôt: 22202019.0
(22) Date de dépôt: 17.10.2022
(51) Int. Cl.: G01D 7/00, B23Q 17/00, G01L 5/00

(54) **DISPOSITIF INDICATEUR POUR UN OUTIL DE SERRAGE COMPORTANT UN CAPTEUR D'EFFORT DE SERRAGE**
ANZEIGEVORRICHTUNG FÜR EIN SPANNWERKZEUG MIT EINEM KLEMMKRAFTSENSOR
INDICATING DEVICE FOR A CLAMPING TOOL WITH A CLAMPING FORCE SENSOR

(30) Priorité: 09.11.2021 FR 2111891
(43) Date de publication de la demande: 10.05.2023
(73) Titulaire: Norelem SAS, 10280 Fontaine les Grès (FR)
(72) Inventeur: LE MEUR, Olivier, 10410 SAINT PARRES AUX TERTRES (FR)
(74) Mandataire: Loyer & Abello

(56) Documents cités:
- EP-A2- 1 306 939
- DE-U1- 29 806 179
- DE-U1-202020 000 850
- US-A1- 2009 194 924
- US-A1- 2015 168 181

## Description

### Domaine technique

L'invention se rapporte à un dispositif indicateur pour un outil de serrage. Plus particulièrement, le dispositif indicateur est configuré pour être connecté à un outil de serrage, l'outil de serrage comportant un capteur d'effort de serrage apte à mesurer un effort de serrage appliqué à une pièce et une unité de transmission configurée pour transmettre un signal encodant une valeur mesurée par le capteur d'effort de serrage.

### Technique antérieure

Dans le domaine des outils de serrage, on connaît des outils de serrage qui permettent à un opérateur utilisant l'outil de serrage d'obtenir une indication d'un effort de serrage appliqué à une pièce. On peut notamment citer les clés dynamométriques à cadran, où un cadran intégré à la clé indique à l'opérateur le couple de serrage qu'il est en train d'appliquer au moyen de la clé. Le document EP 1 306 939 A2 divulgue un dispositif indicateur conforme au préambule de la revendication 1. Le document US 2009/0194924 A1 divulgue une pince munie d'un capteur d'effort de serrage.

Toutefois, tous les types d'outils de serrage n'intègrent pas nécessairement un dispositif intégré fournissant une indication d'un effort de serrage. En outre, même pour les outils de serrage qui intègrent un tel dispositif, l'indication de l'effort de serrage dépend de l'implémentation choisie par le constructeur de l'outil de serrage ; et l'indication de l'effort de serrage ne permet pas à l'opérateur de savoir directement si l'effort de serrage appliqué par l'outil de serrage est excessif ou non pour une pièce donnée.

### Résumé de l'invention

Une idée à la base de l'invention consiste à proposer un dispositif indicateur qui est apte à être connecté à un outil de serrage voire à plusieurs types d'outils de serrage différents, et qui permet de fournir à un opérateur une indication visuelle de l'effort de serrage appliqué à une pièce par l'outil de serrage.

L'invention propose ainsi un dispositif indicateur configuré pour être connecté à un outil de serrage, l'outil de serrage comportant un capteur d'effort de serrage apte à mesurer un effort de serrage appliqué à une pièce, le dispositif indicateur comprenant :
- un premier ensemble lumineux, un deuxième ensemble lumineux, et un troisième ensemble lumineux, chacun des ensembles lumineux comportant au moins une diode électroluminescente ; et
- une unité de commande configurée pour recevoir un signal encodant une valeur mesurée par le capteur d'effort de serrage, et pour commander l'allumage de chacun des ensembles lumineux,
l'unité de commande étant configurée pour :
(i) allumer le premier ensemble lumineux lorsque la valeur mesurée par le capteur d'effort de serrage est comprise dans un premier intervalle, la borne inférieure du premier intervalle étant strictement supérieure à une première valeur cible ;
(ii) allumer le premier ensemble lumineux et le deuxième ensemble lumineux lorsque la valeur mesurée par le capteur d'effort de serrage est comprise dans un deuxième intervalle, le deuxième intervalle étant adjacent au premier intervalle et incluant une deuxième valeur cible strictement supérieure à la première valeur cible ;
(iii) allumer le premier ensemble lumineux, le deuxième ensemble lumineux et le troisième ensemble lumineux lorsque la valeur mesurée par le capteur d'effort de serrage est strictement supérieure à la borne supérieure du deuxième intervalle.

Par allumer un ensemble lumineux, on entend :
- lorsque l'ensemble lumineux comporte une seule diode électroluminescente, allumer ladite diode électroluminescente ;
- lorsque l'ensemble lumineux comporte deux diodes électroluminescentes ou plus, allumer au moins une desdites diodes électroluminescentes.

Par « adjacent », on entend que la borne inférieure d'un intervalle est égale à la borne supérieure d'un autre intervalle. Purement à titre d'illustration, l'intervalle [0 ; 1[ est adjacent à l'intervalle [1 ; 2], tandis que l'intervalle [0 ; 1[ n'est pas adjacent à l'intervalle [2 ; 3].

Le premier intervalle et le deuxième intervalle peuvent être chacun ouvert, fermé ou semi-fermé. Toutefois, il convient que le premier intervalle et le deuxième intervalle soient définis de telle sorte qu'aucun nombre ne peut appartenir simultanément au premier intervalle et le deuxième intervalle. Ceci est le cas dans l'exemple illustratif donné précédemment : l'intervalle [0 ; 1[ est adjacent à l'intervalle [1 ; 2], mais le nombre 1 est inclus dans l'intervalle [1 ; 2] sans être inclus dans l'intervalle [0 ; 1[.

Les termes « intervalle ouvert », « intervalle fermé », « intervalle semi-fermé », « borne inférieure » et « borne supérieure » ont leurs définitions mathématiques usuelles.

Grâce au fait que l'allumage des ensembles lumineux dépend de la valeur mesurée par le capteur d'effort de serrage, un opérateur peut obtenir, grâce au dispositif indicateur, une indication visuelle de l'effort de serrage appliqué par l'outil de serrage à la pièce.

Selon des modes de réalisation, un tel dispositif indicateur peut présenter une ou plusieurs des caractéristiques suivantes.

Le dispositif indicateur comprend en outre un boîtier, l'unité de commande étant disposée dans le boîtier.

Le premier ensemble lumineux, le deuxième ensemble lumineux et le troisième ensemble lumineux sont disposés sur une même face du boîtier.

Selon un mode de réalisation, le deuxième ensemble lumineux est disposé sur ladite face du boîtier entre le premier ensemble lumineux et le troisième ensemble lumineux.

Selon un mode de réalisation, la deuxième valeur cible est une valeur consigne d'effort de serrage, qui peut être fixée à l'avance ou bien définie par un utilisateur du dispositif indicateur.

Ainsi, le deuxième intervalle peut être un intervalle de valeurs acceptables de l'effort de serrage, et l'allumage du deuxième ensemble lumineux peut indiquer visuellement à l'utilisateur que l'effort de serrage appliqué à la pièce se situe dans cet intervalle de valeurs acceptables. Inversement, le premier intervalle peut être un intervalle de valeurs de l'effort de serrage où l'effort de serrage est inférieur aux valeurs acceptables de l'effort de serrage, et l'allumage du premier ensemble lumineux seul indique peut indiquer visuellement à l'utilisateur que l'effort de serrage appliqué à la pièce est encore insuffisant. En outre, l'allumage du troisième ensemble lumineux peux indiquer visuellement à l'utilisateur que l'effort de serrage appliqué à la pièce est excessif.

Par exemple, la largeur du deuxième intervalle peut être définie par une tolérance sur la valeur consigne d'effort de serrage. Dans des exemples particuliers de réalisation, la largeur du deuxième intervalle peut être égale à 20% ou 10% de la valeur consigne d'effort de serrage.

Selon un mode de réalisation, l'unité de commande est configurée pour allumer le deuxième ensemble lumineux et/ou le troisième ensemble lumineux lorsque la valeur mesurée par le capteur d'effort de serrage est comprise dans un troisième intervalle adjacent au premier intervalle et incluant la première valeur cible.

Selon un mode de réalisation, la première valeur cible est une valeur tare, qui peut être fixée à l'avance ou bien définie par un utilisateur du dispositif indicateur.

La valeur tare peut par exemple indiquer une absence d'effort de serrage appliqué à la pièce. Ainsi, le troisième intervalle peut être un intervalle où l'effort de serrage est nul à une tolérance près. Dans des exemples particuliers de réalisation, la largeur du troisième intervalle peut être égale à 10% ou 5% de la valeur consigne d'effort de serrage.

Selon un mode de réalisation, les diodes électroluminescentes du premier ensemble lumineux sont d'une première couleur, les diodes électroluminescentes du deuxième ensemble lumineux sont d'une deuxième couleur, et les diodes électroluminescentes du troisième ensemble lumineux sont d'une troisième couleur, la première couleur, la deuxième couleur et la troisième couleur étant distinctes les unes des autres.

Selon un mode de réalisation, la première couleur est du vert, la deuxième couleur est du orange, et la troisième couleur est du rouge.

Selon un mode de réalisation, les diodes électroluminescentes du premier ensemble lumineux et du deuxième ensemble lumineux sont d'une première couleur, et les diodes électroluminescentes du troisième ensemble lumineux sont d'une deuxième couleur, la deuxième couleur étant distincte de la première couleur.

Selon un mode de réalisation, la première couleur est du vert, et la deuxième couleur est du rouge.

Le boîtier comporte un bouton de commande, l'unité de commande étant connectée au bouton de commande de façon à pouvoir détecter une pression sur le bouton de commande.

Selon un mode de réalisation, le bouton de commande est disposé sur ladite face du boîtier.

L'unité de commande est configurée pour :
- lors de la détection d'une première pression sur le bouton de commande pendant une durée supérieure ou égale à une durée prédéterminée, passer en mode de calibration, et commander l'allumage desdits ensembles lumineux de façon à fournir une première indication visuelle à l'utilisateur représentative du mode de calibration ; et
- dans le mode de calibration, lors de la détection d'une deuxième pression sur le bouton de commande, enregistrer en mémoire la valeur mesurée par le capteur d'effort de serrage comme la première valeur cible ou la deuxième valeur cible, sortir du mode de calibration, et commander l'allumage desdits ensembles lumineux de façon à fournir une deuxième indication visuelle à l'utilisateur distincte de la première indication visuelle.

Selon un mode de réalisation, l'unité de commande est configurée pour :
- lors de la détection d'une première pression sur le bouton de commande pendant une durée supérieure ou égale à une durée prédéterminée, passer en mode de calibration, et commander l'allumage desdits ensembles lumineux de façon à fournir une première indication visuelle à l'utilisateur représentative du mode de calibration ;
- dans le mode de calibration, lors de la détection d'une deuxième pression sur le bouton de commande, enregistrer en mémoire la valeur mesurée par le capteur d'effort de serrage comme la première valeur cible, et commander l'allumage desdits ensembles lumineux de façon à fournir une deuxième indication visuelle à l'utilisateur distincte de la première indication visuelle ;
- dans le mode de calibration, lors de la détection d'une troisième pression sur le bouton de commande, enregistrer en mémoire la valeur mesurée par le capteur d'effort de serrage comme la deuxième valeur cible, sortir du mode de calibration, et commander l'allumage desdits ensembles lumineux de façon à fournir une troisième indication visuelle à l'utilisateur distincte de la première indication visuelle et de la deuxième indication visuelle.

Selon un mode de réalisation, l'unité de commande est configurée pour recevoir le signal depuis une unité de transmission que comporte l'outil de serrage.

Selon un mode de réalisation, l'unité de commande est configurée de façon à pouvoir être connectée à l'unité de transmission de l'outil de serrage via une antenne de communication sans fil et/ou un connecteur.

Selon un mode de réalisation, l'outil de serrage est une bride de serrage, un mors de serrage, une sauterelle de fixation, un crochet de bridage, ou un étau de bridage.

Selon un mode de réalisation, le boîtier est configuré pour être reçu dans un emplacement de réception que comporte l'outil de serrage. Pour cela, par exemple, l'emplacement de réception peut présenter une complémentarité de forme avec au moins une partie de la forme extérieure du boîtier.

L'invention fournit aussi un ensemble comprenant :
- un outil de serrage comportant un capteur d'effort de serrage apte à mesurer un effort de serrage appliqué à une pièce ; et
- un dispositif indicateur tel que décrit ci-dessus.

Selon un mode de réalisation, l'outil de serrage comporte une unité de transmission, et l'unité de commande est configurée pour recevoir le signal depuis l'unité de transmission.

Selon un mode de réalisation, l'outil de serrage comporte un emplacement de réception, et le boîtier du dispositif indicateur est reçu dans l'emplacement de réception.

L'invention fournit aussi un outil de serrage comportant :
- un capteur d'effort de serrage apte à mesurer un effort de serrage appliqué à une pièce ;
- un premier ensemble lumineux, un deuxième ensemble lumineux, et un troisième ensemble lumineux, chacun des ensembles lumineux comportant au moins une diode électroluminescente ; et
- une unité de commande configurée pour recevoir un signal encodant une valeur mesurée par le capteur d'effort de serrage, et pour commander l'allumage de chacun des ensembles lumineux,
l'unité de commande étant configurée pour :
(i) allumer le premier ensemble lumineux lorsque la valeur mesurée par le capteur d'effort de serrage est comprise dans un premier intervalle, la borne inférieure du premier intervalle étant strictement supérieure à une première valeur cible ;
(ii) allumer le premier ensemble lumineux et le deuxième ensemble lumineux lorsque la valeur mesurée par le capteur d'effort de serrage est comprise dans un deuxième intervalle, le deuxième intervalle étant adjacent au premier intervalle et incluant une deuxième valeur cible strictement supérieure à la première valeur cible ;
(iii) allumer le premier ensemble lumineux, le deuxième ensemble lumineux et le troisième ensemble lumineux lorsque la valeur mesurée par le capteur d'effort de serrage est strictement supérieure à la borne supérieure du deuxième intervalle.

Les expressions « allumer un ensemble lumineux », « adjacent », « premier intervalle », « deuxième intervalle » ont les mêmes définitions que celles données ci-dessus.

Selon des modes de réalisation, un tel outil de serrage peut présenter une ou plusieurs des caractéristiques suivantes.

Selon un mode de réalisation, l'outil de serrage comprend en outre un boîtier, l'unité de commande étant disposée dans le boîtier.

Selon un mode de réalisation, le premier ensemble lumineux, le deuxième ensemble lumineux et le troisième ensemble lumineux sont disposés sur une même face du boîtier.

Selon un mode de réalisation, le deuxième ensemble lumineux est disposé sur ladite face du boîtier entre le premier ensemble lumineux et le troisième ensemble lumineux.

Selon un mode de réalisation, la deuxième valeur cible est une valeur consigne d'effort de serrage, qui peut être fixée à l'avance ou bien définie par un utilisateur du dispositif indicateur.

Ainsi, le deuxième intervalle peut être un intervalle de valeurs acceptables de l'effort de serrage, et l'allumage du deuxième ensemble lumineux peut indiquer visuellement à l'utilisateur que l'effort de serrage appliqué à la pièce se situe dans cet intervalle de valeurs acceptables. Inversement, le premier intervalle peut être un intervalle de valeurs de l'effort de serrage où l'effort de serrage est inférieur aux valeurs acceptables de l'effort de serrage, et l'allumage du premier ensemble lumineux seul indique peut indiquer visuellement à l'utilisateur que l'effort de serrage appliqué à la pièce est encore insuffisant. En outre, l'allumage du troisième ensemble lumineux peux indiquer visuellement à l'utilisateur que l'effort de serrage appliqué à la pièce est excessif.

Par exemple, la largeur du deuxième intervalle peut être définie par une tolérance sur la valeur consigne d'effort de serrage. Dans des exemples particuliers de réalisation, la largeur du deuxième intervalle peut être égale à 20% ou 10% de la valeur consigne d'effort de serrage.

Selon un mode de réalisation, l'unité de commande est configurée pour allumer le deuxième ensemble lumineux et/ou le troisième ensemble lumineux lorsque la valeur mesurée par le capteur d'effort de serrage est comprise dans un troisième intervalle adjacent au premier intervalle et incluant la première valeur cible.

Selon un mode de réalisation, la première valeur cible est une valeur tare, qui peut être fixée à l'avance ou bien définie par un utilisateur de l'outil de serrage.

La valeur tare peut par exemple indiquer une absence d'effort de serrage appliqué à la pièce. Ainsi, le troisième intervalle peut être un intervalle où l'effort de serrage est nul à une tolérance près. Dans des exemples particuliers de réalisation, la largeur du troisième intervalle peut être égale à 10% ou 5% de la valeur consigne d'effort de serrage.

Selon un mode de réalisation, les diodes électroluminescentes du premier ensemble lumineux sont d'une première couleur, les diodes électroluminescentes du deuxième ensemble lumineux sont d'une deuxième couleur, et les diodes électroluminescentes du troisième ensemble lumineux sont d'une troisième couleur, la première couleur, la deuxième couleur et la troisième couleur étant distinctes les unes des autres.

Selon un mode de réalisation, la première couleur est du vert, la deuxième couleur est du orange, et la troisième couleur est du rouge.

Selon un mode de réalisation, les diodes électroluminescentes du premier ensemble lumineux et du deuxième ensemble lumineux sont d'une première couleur, et les diodes électroluminescentes du troisième ensemble lumineux sont d'une deuxième couleur, la deuxième couleur étant distincte de la première couleur.

Selon un mode de réalisation, la première couleur est du vert, et la deuxième couleur est du rouge.

Selon un mode de réalisation, le boîtier comporte un bouton de commande, l'unité de commande étant connectée au bouton de commande de façon à pouvoir détecter une pression sur le bouton de commande.

Selon un mode de réalisation, le bouton de commande est disposé sur ladite face du boîtier.

Selon un mode de réalisation, l'unité de commande est configurée pour :
- lors de la détection d'une première pression sur le bouton de commande pendant une durée supérieure ou égale à une durée prédéterminée, passer en mode de calibration, et commander l'allumage desdits ensembles lumineux de façon à fournir une première indication visuelle à l'utilisateur représentative du mode de calibration ; et
- dans le mode de calibration, lors de la détection d'une deuxième pression sur le bouton de commande, enregistrer en mémoire la valeur mesurée par le capteur d'effort de serrage comme la première valeur cible ou la deuxième valeur cible, sortir du mode de calibration, et commander l'allumage desdits ensembles lumineux de façon à fournir une deuxième indication visuelle à l'utilisateur distincte de la première indication visuelle.

Selon un mode de réalisation, l'unité de commande est configurée pour :
- lors de la détection d'une première pression sur le bouton de commande pendant une durée supérieure ou égale à une durée prédéterminée, passer en mode de calibration, et commander l'allumage desdits ensembles lumineux de façon à fournir une première indication visuelle à l'utilisateur représentative du mode de calibration ;
- dans le mode de calibration, lors de la détection d'une deuxième pression sur le bouton de commande, enregistrer en mémoire la valeur mesurée par le capteur d'effort de serrage comme la première valeur cible, et commander l'allumage desdits ensembles lumineux de façon à fournir une deuxième indication visuelle à l'utilisateur distincte de la première indication visuelle ;
- dans le mode de calibration, lors de la détection d'une troisième pression sur le bouton de commande, enregistrer en mémoire la valeur mesurée par le capteur d'effort de serrage comme la deuxième valeur cible, sortir du mode de calibration, et commander l'allumage desdits ensembles lumineux de façon à fournir une troisième indication visuelle à l'utilisateur distincte de la première indication visuelle et de la deuxième indication visuelle.

Selon un mode de réalisation, l'outil de serrage est une bride de serrage, un mors de serrage, une sauterelle de fixation, un crochet de bridage, ou un étau de bridage.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 est une vue en perspective d'un dispositif indicateur configuré pour être connecté à un outil de serrage.
[Fig. 2] La figure 2 est une vue en perspective du boîtier pris isolément du dispositif indicateur de la figure 1.
[Fig. 3] La figure 3 est un diagramme-blocs fonctionnel représentant l'interaction entre le dispositif indicateur de la figure 1 et un outil de serrage comportant un capteur d'effort de serrage.
[Fig. 4] La figure 4 est un ensemble de vues schématiques de trois ensembles lumineux du dispositif indicateur de la figure 1, chacune des vues (a) à (f) illustrant l'allumage des ensembles lumineux selon une valeur différente de l'effort de serrage mesuré par le capteur d'effort de serrage.
[Fig. 5] La figure 5 est un ensemble de vues schématiques analogue à celui de la figure 4, selon une variante de réalisation.
[Fig. 6] La figure 6 est un organigramme représentant différentes étapes mises en oeuvre par l'unité de commande du dispositif et par un opérateur au moyen du bouton de commande du dispositif indicateur.
[Fig. 7] La figure 7 est un diagramme-blocs fonctionnel d'un outil de serrage comportant un capteur d'effort de serrage, selon une variante.

### Description des modes de réalisation

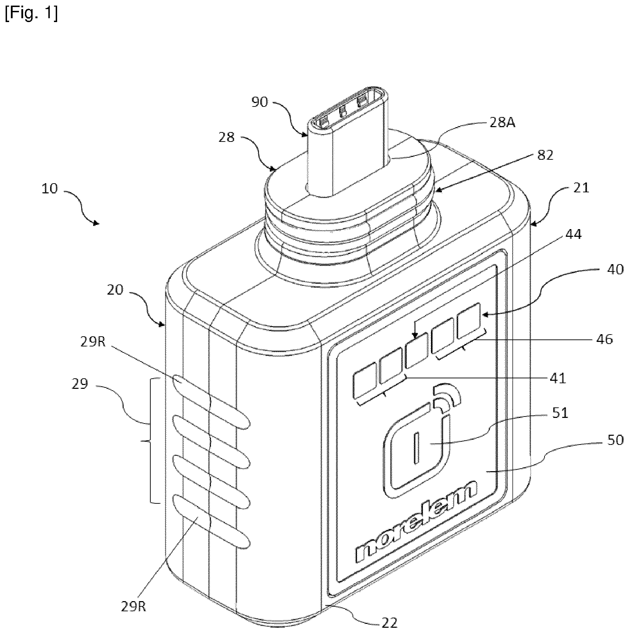

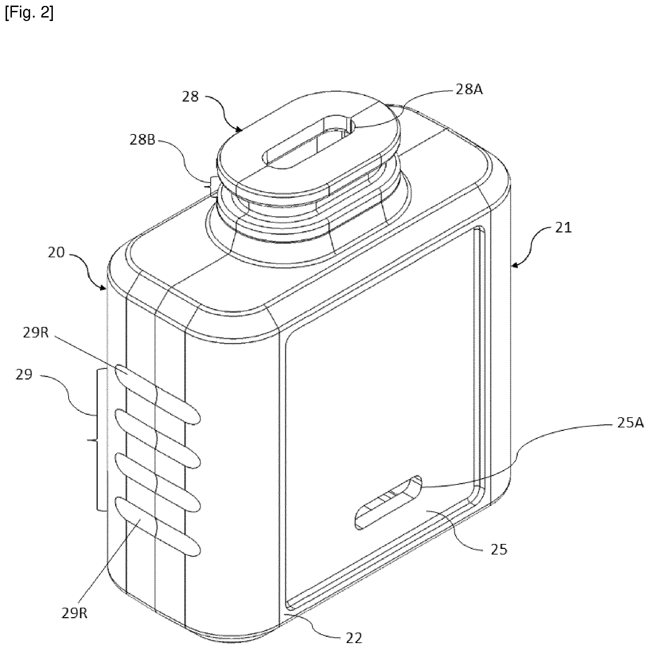

On a représenté sur la figure 1 un dispositif indicateur 10 (ci-après appelé « le dispositif 10 » par commodité) selon un mode de réalisation particulier de l'invention. Comme représenté sur cette figure, le dispositif 10 comprend un boîtier 20. Une face 22 du boîtier 20 porte un groupe 40 d'ensembles lumineux. Le groupe 40 comprend trois ensembles lumineux 41, 44 et 46, qui comportent chacun au moins une diode électroluminescente (DEL ; dénommées en anglais « light-emitting diode » ou LED). Une unité de commande, prenant par exemple la forme d'un microprocesseur 30 (non visible sur les figures 1 et 2), commande l'allumage de chacun des ensembles lumineux 41, 44 et 46 comme on va le décrire plus loin.

On décrit maintenant la construction du dispositif 10 en se référant aux figures 1 à 3. Le boîtier 20 délimite un espace interne qui reçoit une carte électronique (dénommée en anglais « printed circuit board » ou PCB) (non représentée), et une source d'énergie (non représentée) pour alimenter la carte électronique ainsi que les ensembles lumineux 41, 44 et 46. Par exemple la source d'énergie peut être une batterie, en particulier une batterie lithium-ion.

On voit en outre sur la figure 1 que le dispositif 10 peut comporter un connecteur 90, par exemple du type USB (« Universal Serial Bus » en anglais), ici du type USB-C. En complément ou en alternative, la carte électronique peut porter une antenne de communication sans fil (non représentée), par exemple du type NFC (« Near Field Communication » en anglais) ou du type BLE (« Bluetooth Low Energy » en anglais).

La figure 2 est une vue du boîtier 20 pris isolément. Le boîtier 20 comporte un corps 21 de forme générale parallélépipédique, éventuellement chanfreiné. Comme cela est représenté sur la figure 2, la face 22 du boîtier 20 qui porte les ensembles lumineux 41, 44 et 46 présente un évidement 25, par exemple de forme générale rectangulaire. L'évidement 25 reçoit un clavier à membrane 50, visible sur la figure 1. Ce clavier à membrane 50 comporte un bouton de commande 51, dont la fonction est décrite plus loin. Les DEL des ensembles lumineux 41, 44 et 46 peuvent être intégrées au clavier à membrane 50 ou bien disposées dans l'évidement 25, sous le clavier à membrane 50, c'est-à-dire entre le clavier à membrane 50 et le fond de l'évidement 25. Au fond de l'évidement 25, il est ménagé un trou traversant 25A permettant le passage d'un faisceau de câbles (non représentés sur les dessins) connectant le microprocesseur 30 aux DEL des ensembles lumineux 41, 44 et 46 et au bouton de commande 50.

On voit en outre sur les figures 1 et 2 que le corps 21 du boîtier 20 comporte, ici sur une de ses faces qui est adjacente à la face 22, une portion en saillie 28. La portion en saillie 28 comporte un trou ovalisé 28A de forme complémentaire à celle du connecteur 90, de sorte que le connecteur 90 est en saillie depuis la portion en saillie 28. En outre, la portion en saillie 28 peut présenter une gorge 28B (cf. figure 2) recevant un joint d'étanchéité 82 (cf. figure 1), ici du type quadrilobe. Le joint d'étanchéité 82 peut permettre d'assurer une étanchéité avec un port d'entrée d'un dispositif extérieur (non représenté) auquel le dispositif 10 est destiné à être connecté via le connecteur 90.

On voit également sur la figure 1 que le boîtier 20 peut comporter, sur deux faces opposées, deux séries 29 de rainures 29R qui peuvent aider à la préhension du boîtier 20 et donc du dispositif 10 par un opérateur.

Comme on l'a déjà mentionné, l'espace interne délimité par le boîtier 20 renferme le microprocesseur 30 et la source d'énergie permettant de l'alimenter en électricité. On comprend donc que le boîtier 20 permet à un opérateur de disposer d'un dispositif 10 particulièrement simple à transporter, à manier, et à utiliser. Le boîtier 20 peut notamment être réalisé par moulage par injection d'un polymère, par exemple d'un polyamide (notamment de nylon 6 (polycaprolactame)) ou d'un polyacétal (notamment de polyoxyméthylène, plus particulièrement de polyoxyméthylène copolymère (POM-C)). En outre, si le connecteur 90 est du type USB, en particulier USB-C, le connecteur 90 peut permettre de recharger la batterie du dispositif 10 de façon connue en soi, ce qui facilite encore l'utilisation du dispositif 10.

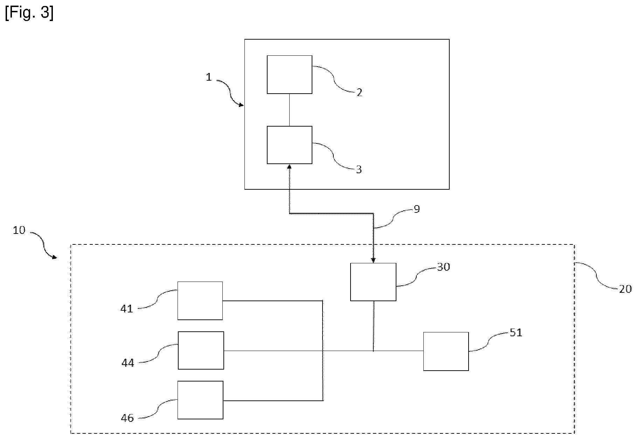

On décrit maintenant l'utilisation du dispositif 10 en association avec un outil de serrage 1, en se référant aux figures 3 à 6.

Sur le diagramme-blocs fonctionnel de la figure 3, on a représenté que le dispositif 10 est configuré pour être connecté à un outil de serrage 1. Plus précisément, l'outil de serrage 1 comporte un capteur d'effort de serrage 2 et une unité de transmission 3. Le capteur d'effort de serrage 2 (ci-après désigné « le capteur 2 » par commodité) est apte à mesurer un effort de serrage F appliqué par l'outil de serrage 1 à une pièce (non représentée). L'unité de transmission 3 est configurée pour transmettre un signal encodant une valeur V de l'effort de serrage F mesuré par le capteur 2. Le microprocesseur 30 est configuré pour recevoir le signal transmis par l'unité de transmission 3 via une connexion 9. La connexion 9 peut être, selon le cas, une connexion sans fil établie via l'antenne de communication sans fil mentionnée ci-dessus ou bien une connexion physique établie via le connecteur 90. En outre, de façon non représentée, l'antenne de communication sans fil peut être utilisée pour établir une connexion sans fil entre le dispositif 10 et un autre dispositif extérieur (non représenté) afin de transmettre la valeur V de l'effort de serrage F mesuré par le capteur 2 vers ce dispositif extérieur.

Un grand nombre de types d'outils de serrage 1 peut être envisagé, tant qu'il s'agit d'un outil de serrage où un capteur d'effort de serrage 2 mesure un effort de serrage F appliqué par l'outil de serrage 1 à une pièce. Notamment, l'outil de serrage 1 peut être une bride de serrage, un mors de serrage, une sauterelle de fixation, un crochet de bridage, ou un étau de bridage.

Comme on l'a mentionné précédemment, le microprocesseur 30 commande l'allumage de chaque DEL des ensembles lumineux 41, 44 et 46.

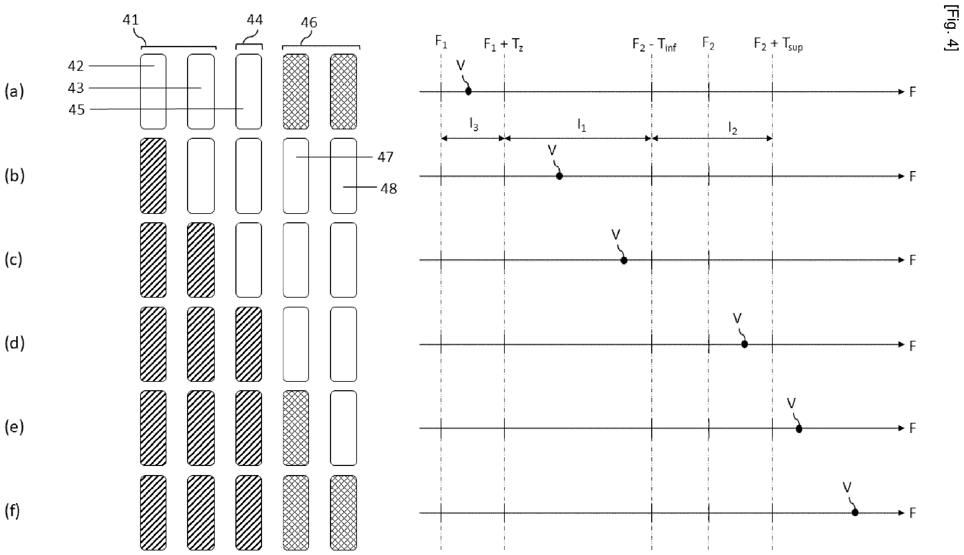

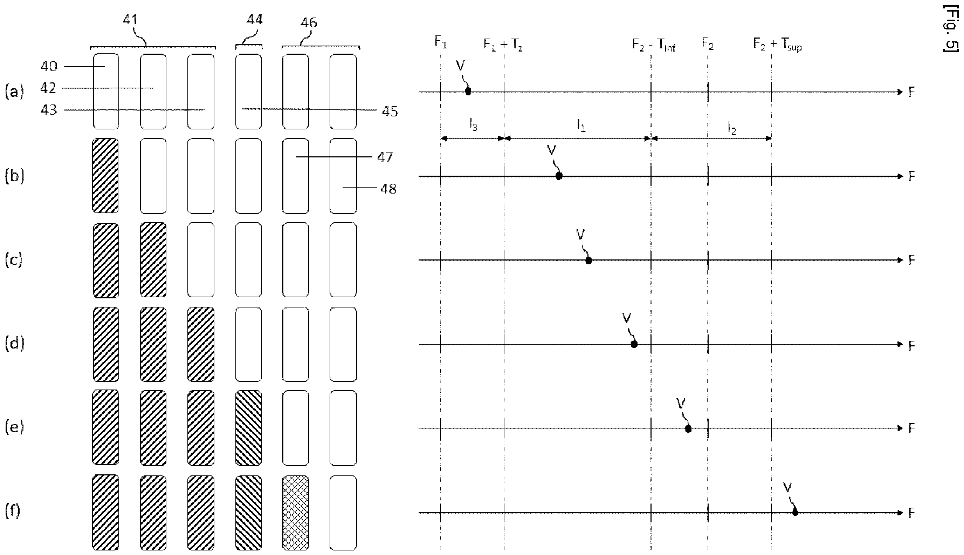

Notamment, le microprocesseur 30 commande l'allumage des ensembles lumineux 41, 44, 46 en fonction de la position de la valeur V de l'effort de serrage F mesuré par le capteur 2 avec par rapport à des intervalles I₁, I₂ (cf. figures 4 et 5). Plus précisément :
(i) si la valeur V de l'effort de serrage F mesuré par le capteur 2 est comprise dans l'intervalle I₁, alors le microprocesseur 30 allume l'ensemble lumineux 41, les ensembles lumineux 44 et 46 n'étant quant à eux pas allumés ;
(ii) si la valeur V de l'effort de serrage F mesuré par le capteur 2 est comprise dans l'intervalle I₂, alors le microprocesseur 30 allume les ensembles lumineux 41 et 44, l'ensemble lumineux 46 n'étant quant à lui pas allumé ;
(iii) si la valeur V de l'effort de serrage F mesuré par le capteur 2 est strictement supérieure à la borne supérieure de l'intervalle I₂, alors le microprocesseur allume les ensembles lumineux 41, 44 et 46.

Les intervalles I₁ et I₂ sont définis comme suit :
- l'intervalle I₁ est défini de telle sorte que sa borne inférieure soit strictement supérieure à une valeur tare F₁ de l'effort de serrage. Par exemple la borne inférieure de l'intervalle I₁ est fixée à F₁ + T_{z}, où T_{z} est une tolérance sur la valeur tare F₁ ;
- l'intervalle I₂ est adjacent à l'intervalle I₁ et inclut une valeur cible F₂ de l'effort de serrage. Par exemple l'intervalle I₂ est défini par des tolérances T_{inf} et Tₛᵤₚ sur la valeur cible F₂, c'est-à-dire que I₂ = [F₂ - T_{inf} ; F₂ + Tₛᵤₚ] (si I₂ est fermé ; en variante, I₂ peut être semi-fermé ou ouvert).

Les ensembles lumineux 41, 44 et 46 pourraient chacun comporter une unique DEL. Toutefois, il est préférable qu'un, deux voire les trois ensembles lumineux 41, 44 et 46 comporte deux DEL ou plus. Dans ce cas :
- lorsque l'on dit que le microprocesseur 30 allume l'ensemble lumineux 41, 44 ou 46 considéré, on entend que le microprocesseur 30 allume au moins une DEL de l'ensemble lumineux 41, 44 ou 46 considéré ; de manière équivalente, lorsque l'on dit que l'ensemble lumineux 41, 44 ou 46 est allumé, on entend qu'au moins une DEL de l'ensemble lumineux 41, 44 ou 46 considéré est allumée ;
- il est préférable que le nombre de DEL allumées dans l'ensemble lumineux 41, 44 ou 46 considéré croisse à mesure que la valeur V de l'effort de serrage F mesuré par le capteur 2 croît ; ceci peut être obtenu en subdivisant les intervalles I₁ et I₂ en sous-intervalles et en comparant la valeur V avec ces sous-intervalles, par exemple.

Inversement, lorsque l'on dit qu'un ensemble lumineux 41, 44 ou 46 est « éteint », on entend que toutes les DEL de cet ensemble lumineux sont éteintes.

On a représenté sur la figure 4 un premier exemple de réalisation des ensembles lumineux 41, 44 et 46. Sur les vues (a) à (f) de la figure 4, l'allumage des ensembles lumineux 41, 44, 46 est représenté en regard de différentes valeurs V de l'effort de serrage F mesuré par le capteur 2. Dans l'exemple représenté, l'ensemble lumineux 41 comporte deux DEL 42 et 43, toutes les deux de couleur verte ; l'ensemble lumineux 44 comporte une unique DEL 45, de la même couleur verte que les DEL 42 et 43 ; et l'ensemble lumineux 46 comporte deux DEL 47 et 48, toutes les deux de couleur rouge. Une DEL de couleur verte allumée est représentée avec des hachures simples obliques, une DEL de couleur rouge allumée est représentée avec des hachures doubles, et une DEL éteinte est représentée en blanc indépendamment de sa couleur.

Sur les vues (b) et (c) de la figure 4, la valeur V de l'effort de serrage F mesuré par le capteur 2 est comprise dans l'intervalle I₁ ; seul l'ensemble lumineux 41 est allumé, tandis que les ensembles lumineux 44 et 46 sont éteints.

Sur la vue (d) de la figure 4, la valeur V de l'effort de serrage F mesuré par le capteur 2 est comprise dans l'intervalle I₂ ; les DEL 42 et 43 de l'ensemble lumineux 41 sont allumées, et en outre, la DEL 45 de l'ensemble lumineux 44 est allumée.

Sur les vues (e) et (f) de la figure 4, la valeur V de l'effort de serrage F mesuré par le capteur 2 est strictement supérieure à la borne supérieure F₂ + Tₛᵤₚ de l'intervalle I₂ ; les DEL 42 et 43 de l'ensemble lumineux 41 sont allumées, la DEL 45 de l'ensemble lumineux 44 est allumée, et en outre, l'ensemble lumineux 46 est allumé.

On voit en outre sur la vue (a) de la figure 4 que lorsque la valeur V de l'effort de serrage F mesuré par le capteur 2 est comprise dans un intervalle I₃ adjacent à l'intervalle I₁ et incluant la valeur tare F₁, les deux DEL 47 et 48 de l'ensemble lumineux 46 sont allumées, tandis que les DEL 42, 43 et 45 des ensembles lumineux 41 et 44 sont éteintes.

Dans un exemple particulier, la valeur tare F₁ est choisie égale à F₁ = 0 N, tandis que F₂ est une valeur consigne de serrage de l'ordre de 1 à 10 kN, par exemple F₂ = 8 kN ; on a Tₛᵤₚ = T_{inf} = 0,1*F₂, c'est-à-dire que la largeur de l'intervalle I₂ est égale à 20% de F₂ ; et on a T_{z} = 0,1*F₂, c'est-à-dire que la largeur de l'intervalle I₃ est égale à 10% de F₂, et que la largeur de l'intervalle I₁ est égale à 0,8*F₂.

En outre, lorsque la valeur V de l'effort de serrage F est comprise entre 0,1*F₂ et 0,5*F₂, seule la DEL 42 de l'ensemble lumineux 41 est allumée (vue (b) de la figure 4), tandis que lorsque la valeur V de l'effort de serrage F est comprise entre 0,5*F₂ et 0,9*F₂, les DEL 42 et 43 de l'ensemble lumineux 41 sont allumées (vue (c) de la figure 4).

En outre, lorsque la valeur V de l'effort de serrage F est comprise entre 1,1 *F₂ et 1,5*F₂, seule la DEL 47 de l'ensemble lumineux 46 est allumée (vue (e) de la figure 4), tandis que lorsque la valeur V de l'effort de serrage F est supérieure à 1,5* F₂, les DEL 47 et 48 de l'ensemble lumineux 46 sont allumées (vue (f) de la figure 4).

Les valeurs numériques qui précèdent ne sont que des exemples. Les valeurs de Tₛᵤₚ, T_{inf} et T_{z} peuvent être fixées de nombreuses manières, notamment en fonction de l'outil de serrage 1 et/ou de la pièce que l'on considère.

On précise en outre que la valeur tare F₁ n'est pas obligatoirement choisie égale à 0 N.

On a représenté sur la figure 5 un deuxième exemple de réalisation des ensembles lumineux 41, 44 et 46. Sur les vues (a) à (f) de la figure 5, l'allumage des ensembles lumineux 41, 44, 46 est représenté en regard de différentes valeurs V de l'effort de serrage F mesuré par le capteur 2. Dans l'exemple représenté, l'ensemble lumineux 41 comporte trois DEL 40, 42 et 43, toutes les trois de couleur verte ; l'ensemble lumineux 44 comporte une unique DEL 45, de couleur orange ; et l'ensemble lumineux 46 comporte deux DEL 47 et 48, toutes les deux de couleur rouge. Une DEL de couleur verte allumée est représentée avec des hachures simples obliques vers la droite, une DEL de couleur orange allumée est représentée avec des hachures simples obliques vers la gauche, une DEL de couleur rouge allumée est représentée avec des hachures doubles, et une DEL éteinte est représentée en blanc indépendamment de sa couleur.

On voit sur la vue (a) de la figure 5 que lorsque la valeur V de l'effort de serrage F mesuré par le capteur 2 est comprise dans l'intervalle I₃, toutes les DEL des ensembles lumineux 41, 44 et 46 sont éteintes.

Sur les vues (b), (c) et (d) de la figure 5, la valeur V de l'effort de serrage F mesuré par le capteur 2 est comprise dans l'intervalle I₁ ; seul l'ensemble lumineux 41 est allumé, tandis que les ensembles lumineux 44 et 46 sont éteints.

Sur la vue (e) de la figure 5, la valeur V de l'effort de serrage F mesuré par le capteur 2 est comprise dans l'intervalle I₂ ; les DEL 40, 42 et 43 de l'ensemble lumineux 41 sont allumées, et la DEL 45 de l'ensemble lumineux 44 est allumée, tandis que l'ensemble lumineux 46 est éteint.

Sur la vue (f) de la figure 5, la valeur V de l'effort de serrage F mesuré par le capteur 2 est strictement supérieure à la borne supérieure F₂ + Tₛᵤₚ de l'intervalle I₂ ; les DEL 40, 42 et 43 de l'ensemble lumineux 41 sont allumées, la DEL 45 de l'ensemble lumineux 44 est allumée, et en outre, la DEL 47 de l'ensemble lumineux 46 est allumée.

Dans un exemple particulier, la valeur tare F₁ est choisie égale à F₁ = 0 N, tandis que F₂ est une valeur consigne de serrage de l'ordre de 1 à 10 kN, par exemple F₂ = 8 kN ; on a Tₛᵤₚ = T_{inf} = 0,05*F₂, c'est-à-dire que la largeur de l'intervalle I₂ est égale à 10% de F₂ ; et on a T_{z} = 0,05*F₂, c'est-à-dire que la largeur de l'intervalle I₃ est égale à 5% de F₂, et que la largeur de l'intervalle I₁ est égale à 0,9*F₂.

En outre, lorsque la valeur V de l'effort de serrage F est comprise entre 0,05*F₂ et 0,35*F₂, seule la DEL 40 de l'ensemble lumineux 41 est allumée (vue (b) de la figure 5), tandis que lorsque la valeur V de l'effort de serrage F est comprise entre 0,35*F₂ et 0,65*F₂, les DEL 40 et 42 de l'ensemble lumineux 41 sont allumées (vue (c) de la figure 5), que lorsque la valeur V de l'effort de serrage F est comprise entre 0,65*F₂ et 0,95*F₂.

En outre, lorsque la valeur V de l'effort de serrage F est comprise entre 1,05*F₂ et 1,35*F₂, seule la DEL 47 de l'ensemble lumineux 46 est allumée (vue (f) de la figure 5), tandis que lorsque la valeur V de l'effort de serrage F est supérieure à 1,35* F₂, les DEL 47 et 48 de l'ensemble lumineux 46 sont allumées (non représenté sur la figure 5).

Ici aussi, les valeurs numériques de Tₛᵤₚ, T_{inf} et T_{z} ne sont que des exemples, et la valeur tare F₁ n'est pas obligatoirement choisie égale à 0 N.

Dans les exemples représentés sur les figures 1, 4 et 5, les DEL des ensembles lumineux 41, 44 et 46 sont alignées les unes avec les autres. En combinaison avec le fait que le nombre de DEL allumées dans chaque ensemble lumineux 41, 44 et 46 croît à mesure que la valeur V de l'effort de serrage F mesuré par le capteur 2 croît, ceci permet de donner à l'opérateur une indication particulièrement intuitive qui permet de le guider dans son utilisation de l'outil de serrage 1. Toutefois, de nombreuses autres dispositions des DEL sur la face 22 du boîtier 20 sont possibles. Notamment, les ensembles lumineux 41, 44 et 46 peuvent être alignés sans que toutes les DEL qu'ils comportent soient alignées. Il est toutefois préférable dans ce cas que l'ensemble lumineux 44 soit disposé entre l'ensemble lumineux 41 et l'ensemble lumineux 46.

Il est en outre à noter que les couleurs de DEL mentionnées ci-dessus en rapport avec les figures 4 et 5 ne sont que des exemples. De nombreuses autres combinaisons de couleurs de DEL sont possibles. En outre, les couleurs de DEL peuvent être combinées avec un dessin sur la face 22 et/ou le clavier à membrane 50. Il est même éventuellement envisageable que toutes les DEL soient de la même couleur, et qu'un dessin sur la face 22 et/ou le clavier à membrane 50 entoure l'ensemble lumineux 46. Dans ce dernier cas, l'allumage d'au moins l'une des DEL de l'ensemble lumineux 46 entouré par le dessin signale à l'opérateur que la valeur V mesurée par le capteur 2 a dépassé la borne supérieure F₂ + Tₛᵤₚ de l'intervalle I₂.

Enfin, il est à noter que les nombres de DEL de chaque ensemble lumineux 41, 44 et 46 mentionnés ci-dessus en rapport avec les figures 4 et 5 ne sont que des exemples. De nombreux autres nombres de DEL dans chaque ensemble lumineux 41, 44 et 46 sont possibles.

L'allumage des DEL des ensembles lumineux 41, 44 et 46 est commandé par un programme d'ordinateur convenable que le microprocesseur 30 exécute. Un tel programme d'ordinateur utilise des valeurs cible F₁ et F₂ et de Tₛᵤₚ T_{inf} et T_{z} qui sont stockées en mémoire.

Les valeurs cible F₁ et F₂ peuvent être fournies à la mémoire de diverses manières. Selon une variante, les valeurs cible F₁ et F₂ peuvent être figées dans le code du programme d'ordinateur pré-cité, ou bien stockées en mémoire morte. Toutefois, il est en général souhaitable que les valeurs cible F₁ et F₂ puissent être modifiées, suivant les besoins de l'utilisation du dispositif 10. Ainsi, selon une autre variante, les valeurs cible F₁ et F₂ peuvent être modifiées lors d'une connexion sans fil établie via l'antenne de communication sans fil mentionnée ci-dessus, ou bien lors d'une connexion physique établie via le connecteur 90, avec un programme d'interface utilisateur exécuté sur un ordinateur (non représenté) extérieur au dispositif 10.

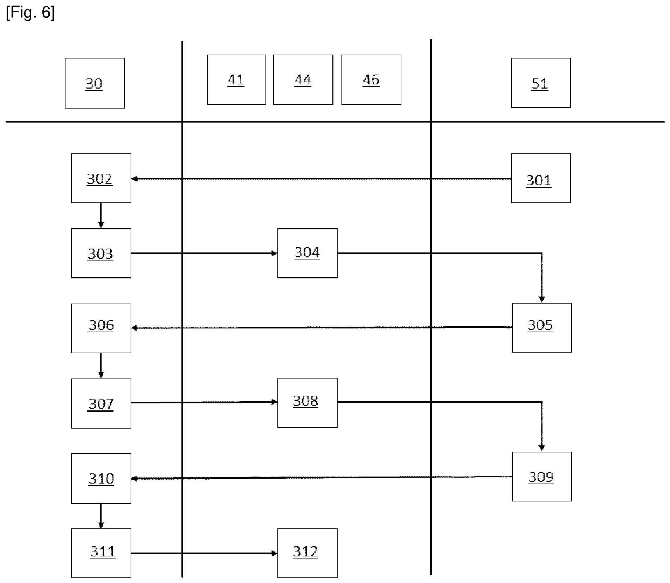

En complément ou en alternative, l'opérateur peut employer le bouton de commande 51 mentionné précédemment pour fixer les valeurs cible F₁ et F₂. La figure 6 est un organigramme représentant différentes étapes mises en oeuvre par l'opérateur au moyen du bouton de commande 51 et par le microprocesseur 30 pour cela.

Sur la figure 6, en 301, l'opérateur presse le bouton de commande 51 et maintient celui-ci pressé. En 302, le microprocesseur 30 détecte que le bouton de commande 51 est maintenu pressé pendant une durée supérieure ou égale à une durée prédéterminée, la durée prédéterminée pouvant être égale à deux secondes (2 s), par exemple. En 303, en réponse à cette détection, le microprocesseur 30 passe en mode de calibration, et commande l'allumage des ensembles lumineux 41, 44 et 46 pour fournir en 304 une indication visuelle à l'opérateur représentative du mode de calibration. Cette indication visuelle peut par exemple consister en l'allumage successif de chacune des DEL des ensembles lumineux 41, 44 et 46. Concrètement, pour passer en mode de calibration, le microprocesseur 30 peut commuter un drapeau stocké en mémoire et indiquant le mode de calibration.

En 305, l'opérateur peut agir sur l'outil de serrage 1 afin que l'effort de serrage détecté par le capteur 2 soit égal à la valeur souhaitée de F₁, par exemple nul, et ensuite presser de nouveau le bouton de commande 51. En 306, le microprocesseur 30 détecte la pression sur le bouton de commande 51 et stocke l'effort de serrage détecté par le capteur 2 en mémoire comme la nouvelle valeur de F₁. En 307, le microprocesseur 30 commande l'allumage des ensembles lumineux 41, 44 et 46 pour fournir en 308 une indication visuelle à l'opérateur distincte de celle fournie en 304.

En 309, l'opérateur peut agir sur l'outil de serrage 1 afin que l'effort de serrage détecté par le capteur 2 soit égal à la nouvelle valeur souhaitée de la valeur cible F₂, et ensuite presser de nouveau le bouton de commande 51. En 310, le microprocesseur 30 détecte la pression sur le bouton de commande 51 et stocke l'effort de serrage détecté par le capteur 2 en mémoire comme la nouvelle valeur de F₂. En 311, le microprocesseur 30 sort du mode de calibration et commande l'allumage des ensembles lumineux 41, 44 et 46 pour fournir en 312 une indication visuelle à l'opérateur, représentative de la sortie du mode de calibration, et distincte de celles fournies en 304 et 308. Cette indication visuelle peut par exemple consister en un clignotement simultané, répété plusieurs fois, de toutes les DEL des ensembles lumineux 41, 44 et 46. Concrètement, pour sortir du mode de calibration, le microprocesseur 30 peut commuter le drapeau stocké en mémoire et indiquant le mode de calibration.

En variante, le dispositif 10 peut ne permettre à l'opérateur de ne modifier que la valeur cible F₁ ou bien que la valeur cible F₂. Les étapes correspondantes décrites ci-dessus en rapport avec la figure 6 ne sont alors pas implémentées.

La forme extérieure du boîtier 20 représentée sur les figures 1 et 2 peut permettre de connecter le dispositif 10 au moyen du connecteur 90 à un port de connexion situé sur une face extérieure de l'outil 1, de façon à établir la connexion physique mentionnée ci-dessus.

Toutefois, la forme extérieure du boîtier 20 représentée sur les figures 1 et 2 n'est qu'un exemple. En variante, de nombreuses autres formes extérieures du boîtier 20 peuvent être envisagées.

Notamment, selon certaines variantes non représentées, l'outil de serrage 1 peut comporter un emplacement de réception, et le boîtier 20 peut être configuré pour être reçu dans cet emplacement de réception. Pour cela, par exemple, l'emplacement de réception peut présenter une complémentarité de forme avec au moins une partie de la forme extérieure du boîtier 20. En tout état de cause, l'emplacement de réception est conformé de façon à permettre d'établir le cas échéant la connexion physique mentionnée ci-dessus avec le dispositif 10 au moyen du connecteur 90.

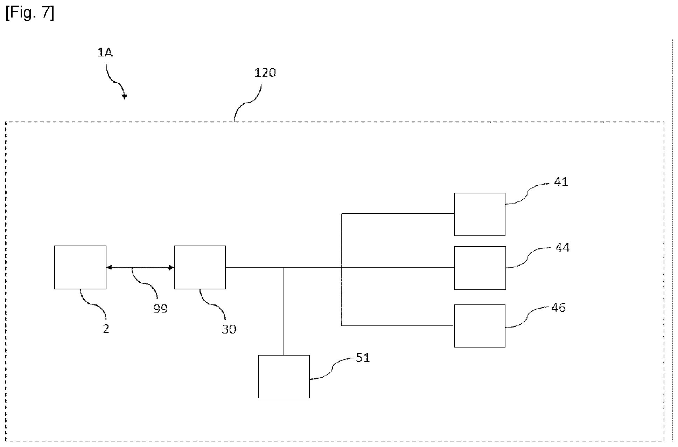

On décrit maintenant un outil de serrage 1A selon une variante, en se référant à la figure 7, qui est un diagramme-blocs de l'outil de serrage 1A. Les éléments identiques à ceux des figures 1 à 6 portent les mêmes signes de référence et ne sont pas décrits à nouveau sauf lorsque cela est nécessaire.

L'outil de serrage 1A comporte, ici aussi, un capteur d'effort de serrage 2 apte à mesurer un effort de serrage F appliqué par l'outil de serrage 1A à une pièce (non représentée).

Comme l'outil de serrage 1, l'outil de serrage 1A peut être une bride de serrage, un mors de serrage, une sauterelle de fixation, un crochet de bridage, ou un étau de bridage.

L'outil de serrage 1A comporte en outre l'unité de commande 30 décrite ci-dessus, laquelle est configurée pour recevoir, via une connexion 99, un signal encodant une valeur V de l'effort de serrage F mesuré par le capteur 2. La connexion 99 peut être réalisée de toute manière appropriée, par exemple sous forme d'une connexion physique, par le biais d'une unité de transmission ou non.

L'outil de serrage 1A comporte en outre les ensembles lumineux 41, 44 et 46 décrits ci-dessus, et optionnellement le bouton de commande 51 décrit ci-dessus.

L'outil de serrage 1A comporte un boîtier 120. Le boîtier 120 délimite un espace interne qui reçoit l'unité de commande 30 et une source d'énergie pour alimenter l'unité de commande 30 ainsi que les ensembles lumineux 41, 44 et 46. De préférence, les ensembles lumineux 41, 44 et 46 et le cas échéant le bouton de commande 51 sont disposés sur une même face (non représentée) du boîtier 120.

La commande des ensembles lumineux 41, 44 et 46 par l'unité de commande 30 est identique à ce qui a été décrit ci-dessus en référence à l'outil de serrage 1, et n'est donc pas détaillée à nouveau par souci de concision.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, lequel est défini par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif indicateur (10) configuré pour être connecté à un outil de serrage (1), l'outil de serrage (1) comportant un capteur d'effort de serrage (2) apte à mesurer un effort de serrage (F) appliqué à une pièce, le dispositif indicateur (10) comprenant :
- un boîtier (20) ;
- un premier ensemble lumineux (41), un deuxième ensemble lumineux (44), et un troisième ensemble lumineux (46), chacun des ensembles lumineux comportant au moins une diode électroluminescente, le premier ensemble lumineux (41), le deuxième ensemble lumineux (44) et le troisième ensemble lumineux (46) étant disposés sur une même face (22) du boîtier (20), et le deuxième ensemble lumineux (44) étant de préférence disposé sur ladite face (22) du boîtier (20) entre le premier ensemble lumineux (41) et le troisième ensemble lumineux (46) ; et
- une unité de commande (30) configurée pour recevoir un signal encodant une valeur (V) mesurée par le capteur d'effort de serrage (2), et pour commander l'allumage de chacun des ensembles lumineux (41, 44, 46),
l'unité de commande (30) étant disposée dans le boîtier (20) et configurée pour :
(i) allumer le premier ensemble lumineux (41) lorsque la valeur (V) mesurée par le capteur d'effort de serrage (2) est comprise dans un premier intervalle (I₁), la borne inférieure du premier intervalle (I₁) étant strictement supérieure à une première valeur cible (F₁) ;
(ii) allumer le premier ensemble lumineux (41) et le deuxième ensemble lumineux (44) lorsque la valeur (V) mesurée par le capteur d'effort de serrage (2) est comprise dans un deuxième intervalle (I₂), le deuxième intervalle (I₂) étant adjacent au premier intervalle (I₁) et incluant une deuxième valeur cible (F₂) strictement supérieure à la première valeur cible (F₁) ;
(iii) allumer le premier ensemble lumineux (41), le deuxième ensemble lumineux (44) et le troisième ensemble lumineux (46) lorsque la valeur (V) mesurée par le capteur d'effort de serrage (2) est strictement supérieure à la borne supérieure du deuxième intervalle (I₂),
dans lequel le boîtier (20) comporte un bouton de commande (51), l'unité de commande (30) étant connectée au bouton de commande (51) de façon à pouvoir détecter une pression sur le bouton de commande,
**caractérisé en ce que** l'unité de commande (30) est configurée pour :
- lors de la détection d'une première pression sur le bouton de commande (51) pendant une durée supérieure ou égale à une durée prédéterminée, passer en mode de calibration, et commander l'allumage desdits ensembles lumineux (41, 44, 46) de façon à fournir une première indication visuelle à l'utilisateur représentative du mode de calibration ; et
- dans le mode de calibration, lors de la détection d'une deuxième pression sur le bouton de commande (51), enregistrer en mémoire la valeur mesurée par le capteur d'effort de serrage (2) comme la première valeur cible (F₁) ou la deuxième valeur cible (F₂), sortir du mode de calibration, et commander l'allumage desdits ensembles lumineux (41, 44, 46) de façon à fournir une deuxième indication visuelle à l'utilisateur distincte de la première indication visuelle.

2. Dispositif indicateur (10) selon la revendication 1, dans lequel l'unité de commande (30) est configurée pour allumer le deuxième ensemble lumineux (44) et/ou le troisième ensemble lumineux (46) lorsque la valeur mesurée par le capteur d'effort de serrage (2) est comprise dans un troisième intervalle (I₃) adjacent au premier intervalle (I₁) et incluant la première valeur cible (F₁).

3. Dispositif indicateur (10) selon l'une quelconque des revendications 1 à 2, dans lequel les diodes électroluminescentes (40, 42, 43) du premier ensemble lumineux (41) sont d'une première couleur, les diodes électroluminescentes (45) du deuxième ensemble lumineux (44) sont d'une deuxième couleur, et les diodes électroluminescentes (47, 48) du troisième ensemble lumineux (46) sont d'une troisième couleur, la première couleur, la deuxième couleur et la troisième couleur étant distinctes les unes des autres.

4. Dispositif indicateur (10) selon la revendication 3, dans lequel la première couleur est du vert, la deuxième couleur est du orange, et la troisième couleur est du rouge.

5. Dispositif indicateur (10) selon l'une quelconque des revendications 1 à 2, dans lequel les diodes électroluminescentes (42, 43, 45) du premier ensemble lumineux (41) et du deuxième ensemble lumineux (44) sont d'une première couleur, et les diodes électroluminescentes (47, 48) du troisième ensemble lumineux (46) sont d'une deuxième couleur, la deuxième couleur étant distincte de la première couleur.

6. Dispositif indicateur (10) selon l'une quelconque des revendications 1 à 5, dans lequel l'unité de commande (30) est configurée pour recevoir le signal depuis une unité de transmission (3) que comporte l'outil de serrage (1).

7. Dispositif indicateur (10) selon la revendication 6, dans lequel l'unité de commande (30) est configurée de façon à pouvoir être connectée à l'unité de transmission (3) de l'outil de serrage (1) via une antenne de communication sans fil et/ou un connecteur (90).

8. Dispositif indicateur (10) selon l'une quelconque des revendications 1 à 7, dans lequel l'outil de serrage (1) est une bride de serrage, un mors de serrage, une sauterelle de fixation, un crochet de bridage, ou un étau de bridage.

9. Dispositif indicateur (10) selon l'une quelconque des revendications 1 à 8, dans lequel le boîtier (20) est configuré pour être reçu dans un emplacement de réception que comporte l'outil de serrage (1).

10. Ensemble comprenant :
- un outil de serrage (1) comportant un capteur d'effort de serrage (2) apte à mesurer un effort de serrage (F) appliqué à une pièce ; et
- un dispositif indicateur (10) selon l'une quelconque des revendications 1 à 9.

11. Ensemble selon la revendication 10, dans lequel l'outil de serrage (1) comporte une unité de transmission (3), et le dispositif indicateur (10) est selon la revendication 6 ou la revendication 7.

12. Ensemble selon la revendication 10 ou 11, dans lequel l'outil de serrage (1) comporte un emplacement de réception, le dispositif indicateur (10) est selon la revendication 9, et le boîtier (20) du dispositif indicateur (10) est reçu dans l'emplacement de réception.

## Patentansprüche

1. Anzeigevorrichtung (10), die so konfiguriert ist, dass sie mit einem Spannwerkzeug (1) verbindbar ist, wobei das Spannwerkzeug (1) einen Klemmkraftsensor (2) umfasst, der eine auf ein Bauteil ausgeübte Spannkraft (F) messen kann, wobei die Anzeigevorrichtung (10) umfasst:
- ein Gehäuse (20);
- eine erste Leuchteinheit (41), eine zweite Leuchteinheit (44) und eine dritte Leuchteinheit (46), wobei jede der Leuchteinheiten mindestens eine elektrolumineszierende Diode umfasst, wobei die erste Leuchteinheit (41), die zweite Leuchteinheit (44) und die dritte Leuchteinheit (46) auf einer gleichen Seite (22) des Gehäuses (20) angeordnet sind, und die zweite Leuchteinheit (44) vorzugsweise auf der Seite (22) des Gehäuses (20) zwischen der ersten Leuchteinheit (41) und der dritten Leuchteinheit (46) angeordnet ist; und
- eine Steuereinheit (30), die so konfiguriert ist, dass sie ein Signal empfängt, das einen von dem Klemmkraftsensor (2) gemessenen Wert (V) codiert, und dass sie das Einschalten jeder der Leuchteinheiten (41, 44, 46) steuert, wobei die Steuereinheit (30) in dem Gehäuse (20) angeordnet und so konfiguriert ist, dass sie:
(i) die erste Leuchteinheit (41) einschaltet, wenn der vom Klemmkraftsensor (2) gemessene Wert (V) innerhalb eines ersten Intervalls (I₁) liegt, wobei der untere Grenzwert des ersten Intervalls (I₁) strikt größer als ein erster Zielwert (F₁) ist;
(ii) die erste Leuchteinheit (41) und die zweite Leuchteinheit (44) einschaltet, wenn der von dem Klemmkraftsensor (2) gemessene Wert (V) in einem zweiten Intervall (I₂) liegt, wobei das zweite Intervall (I₂) an das erste Intervall (I₁) angrenzt und einen zweiten Zielwert (F₂) umfasst, der strikt größer als der erste Zielwert (F₁) ist;
(iii) die erste Leuchteinheit (41), die zweite Leuchteinheit (44) und die dritte Leuchteinheit (46) einschaltet, wenn der von dem Klemmkraft-sensor (2) gemessene Wert (V) strikt größer als der obere Grenzwert des zweiten Intervalls (I₂) ist,
wobei das Gehäuse (20) einen Bedienungsknopf (51) umfasst, wobei die Steuereinheit (30) mit dem Bedienungsknopf (51) verbunden ist, so dass ein Druck auf den Bedienungsknopf erfassbar ist,
**dadurch gekennzeichnet, dass** die Steuereinheit (30) so konfiguriert ist, dass sie:
- bei Erfassung eines ersten Drucks auf den Bedienungsknopf (51) für eine Zeitdauer, die größer oder gleich einer vorbestimmten Zeitdauer ist, in den Kalibrierungsmodus wechselt und das Einschalten der Leuchteinheiten (41, 44, 46) steuert, um dem Benutzer eine erste visuelle Anzeige bereitzustellen, die für den Kalibrierungsmodus repräsentativ ist; und
- im Kalibrierungsmodus bei Erfassen eines zweiten Drucks auf den Bedienungsknopf (51) den vom Klemmkraftsensor (2) gemessenen Wert als ersten Zielwert (F₁) oder als zweiten Zielwert (F₂) im Speicher abspeichert, den Kalibrierungsmodus verlässt und das Einschalten der Leuchteinheiten (41, 44, 46) steuert, um dem Benutzer eine zweite visuelle Anzeige bereitzustellen, die sich von der ersten visuellen Anzeige unterscheidet.

2. Anzeigevorrichtung (10) nach Anspruch 1, wobei die Steuereinheit (30) so konfiguriert ist, dass sie die zweite Leuchteinheit (44) und/oder die dritte Leuchteinheit (46) einschaltet, wenn der von dem Klemmkraftsensor (2) gemessene Wert in einem dritten Intervall (I₃) liegt, das an das erste Intervall (I₁) angrenzt und den ersten Zielwert (F₁) umfasst.

3. Anzeigevorrichtung (10) nach einem der Ansprüche 1 bis 2, wobei die elektrolumineszierenden Dioden (40, 42, 43) der ersten Leuchteinheit (41) eine erste Farbe haben, die elektrolumineszierenden Dioden (45) der zweiten Leuchteinheit (44) eine zweite Farbe haben, und die elektrolumineszierenden Dioden (47, 48) der dritten Leuchteinheit (46) eine dritte Farbe haben, wobei die erste Farbe, die zweite Farbe und die dritte Farbe sich voneinander unterscheiden.

4. Anzeigevorrichtung (10) nach Anspruch 3, wobei die erste Farbe Grün ist, die zweite Farbe Orange ist und die dritte Farbe Rot ist.

5. Anzeigevorrichtung (10) nach einem der Ansprüche 1 bis 2, wobei die elektrolumineszierenden Dioden (42, 43, 45) der ersten Leuchteinheit (41) und der zweiten Leuchteinheit (44) eine erste Farbe haben und die elektrolumineszierenden Dioden (47, 48) der dritten Leuchteinheit (46) eine zweite Farbe haben, wobei die zweite Farbe sich von der ersten Farbe unterscheidet.

6. Anzeigevorrichtung (10) nach einem der Ansprüche 1 bis 5, wobei die Steuereinheit (30) so konfiguriert ist, dass sie das Signal von einer Übertragungseinheit (3), die das Spannwerkzeug (1) umfasst, empfängt.

7. Anzeigevorrichtung (10) nach Anspruch 6, wobei die Steuereinheit (30) so konfiguriert ist, dass sie über eine drahtlose Kommunikationsantenne und/oder einen Verbinder (90) mit der Übertragungseinheit (3) des Spannwerkzeugs (1) verbindbar ist.

8. Anzeigevorrichtung (10) nach einem der Ansprüche 1 bis 7, wobei das Spannwerkzeug (1) eine Spannklemme, eine Spannbacke, ein Senkrechtspanner, ein Spannhaken oder ein Spannschraubstock ist.

9. Anzeigevorrichtung (10) nach einem der Ansprüche 1 bis 8, wobei das Gehäuse (20) so konfiguriert ist, dass es in einer Aufnahmestelle, die das Spannwerkzeug (1) umfasst, aufnehmbar ist.

10. Anordnung umfassend:
- ein Spannwerkzeug (1) mit einem Klemmkraftsensor (2), der geeignet ist, eine auf ein Bauteil ausgeübte Spannkraft (F) zu messen; und
- eine Anzeigevorrichtung (10) nach einem der Ansprüche 1 bis 9.

11. Anordnung nach Anspruch 10, wobei das Spannwerkzeug (1) eine Übertragungseinheit (3) umfasst und die Anzeigevorrichtung (10) nach Anspruch 6 oder Anspruch 7 ist.

12. Anordnung nach Anspruch 10 oder 11, wobei das Spannwerkzeug (1) eine Aufnahmestelle umfasst, wobei die Anzeigevorrichtung (10) nach Anspruch 9 ist und wobei das Gehäuse (20) der Anzeigevorrichtung (10) in der Aufnahmestelle aufgenommen ist.

## Claims

1. Indicator device (10) set up for connection to a clamping tool (1), clamping tool (1) comprising a clamping force sensor (2) capable of measuring a clamping force (F) applied to a part, the said indicator device (10) comprising:
- a case (20);
- a first luminous assembly (41), a second lighted assembly (44), and a third lighted assembly (46), each of the lighted assemblies comprising at least one light-emitting diode, the first lighted assembly (41), the second lighted assembly (44) and the third lighted assembly (46) being arranged on one face (22) of the case (20), and the second lighted assembly (44) preferably being arranged on the said face (22) of the case (20) between the first lighted assembly (41) and the third lighted assembly (46); and
- a control unit (30) configured to receive a signal encoding a value (V) measured by the clamping force sensor (2), and to control the lighting of each of the lighted assemblies (41, 44, 46),
the control unit (30) being arranged in the case (20) and set up to:
(i) switch on the first lighted assembly (41) when the value (V) measured by the clamping force sensor (2) lies within a first interval (1₁), the lower limit of the first interval (1₁) being strictly greater than a first target value (Fi);
(ii) switch on the first lighted assembly (41) and the second lighted assembly (44) when the value (V) measured by the clamping force sensor (2) is comprised within a second interval (1₂), the second interval (1₂) being adjacent to the first interval (1₁) and comprising a second target value (F₂) strictly greater than the first target value (Fi);
(iii) switch on the first lighted assembly (41), the second lighted assembly (44) and the third lighted assembly (46) when the value (V) measured by the clamping force sensor (2) is strictly greater than the upper terminal of the second interval (12),
wherein the case (20) comprises a control button (51), the control unit (30) being connected to the control button (51) in such a way as to be able to detect pressure on the control button,
**characterised in that** the control unit (30) is configured to:
- if the control button (51) is pressed for the first time for a period equal to or greater than a preset time, switch to the
calibration mode, and control the lighting of said lighted assemblies (41, 44, 46) so as to provide a first visual indication to the user representing the calibration mode; and
- in the calibration mode, upon detection of a second press on the control button (51), saving to memory the value measured by the clamping force sensor (2) as the first target value (Fi) or the second target value (Fz), exiting the calibration mode , and controlling the lighting of said lighted assemblies (41, 44, 46) so as to provide a second visual indication to the user, distinct from the first visual indication.

2. An indicator device (10) according to claim 1, wherein the control unit (30) is set up to switch on the second lighted assembly (44) and/or the third lighted assembly (46) when the value measured by the clamping force sensor (2) is within a third interval (1₃) adjacent to the first interval (1₁) and including the first target value (Fi).

3. An indicator device (10) according to any one of claims 1 to 2, wherein the light-emitting diodes (40, 42, 43) of the first lighted assembly (41) are of a first colour, the light-emitting diodes (45) of the second lighted assembly (44) are of a second colour, and the light-emitting diodes (47, 48) of the third lighted assembly are of a third colour, the light-emitting diodes (46) are of a third colour, the first colour, the second colour and the third colour being distinct from one another.

4. An indicator device (10) according to claim 3, wherein the first colour is green, the second colour is orange, and the third colour is red.

5. An indicator device (10) according to any one of claims 1 to 2, wherein the light-emitting diodes (42, 43, 45) of the first lighted assembly (41) and the second lighted assembly (44) are of a first colour, and the light-emitting diodes (47, 48) of the third lighted assembly (46) are of a second colour, the second colour being distinct from the first colour.

6. An indicator device (10) according to any one of claims 1 to 5, wherein the control unit (30) is set up to receive the signal from a transmission unit (3) carried by the clamping tool (1).

7. An indicator device (10) according to claim 6, wherein the control unit (30) is set up to be connected to the transmission unit (3) of the clamping tool (1) via a wireless communication antenna and/or connector (90).

8. An indicator device (10) according to any one of claims 1 to 7, wherein the clamping tool (1) is a clamp, a clamping jaw, a clamping claw, a clamping hook, or a clamping vise.

9. An indicator device (10) according to any one of claims 1 to 8, wherein the control unit (20) is set up to be received in a reception location comprised in the clamping tool (1).

10. A set comprising:
- a clamping tool (1) comprising a clamping force sensor (2) capable of measuring a clamping force (F) applied to a workpiece; and
- an indicator device (10) according to any one of claims 1 to 9.

11. A set according to claim 10, wherein the clamping tool (1) comprises a transmission unit (3), and the indicator device (10) is according to claim 6 or claim 7.

12. An assembly according to claim 10 or 11, wherein the clamping tool (1) comprises a receiving location, the indicator device (10) is according to claim 9, and the case (20) of the indicator device (10) is received in the receiving location.
